# EUROPEAN PATENT APPLICATION

(11) **EP 4 074 635 A1**
(43) Date of publication of application: **19.10.2022**
(21) Application number: 21382310.7
(22) Date of filing: 13.04.2021
(51) Int. Cl.: B65G 54/02

(54) **METHOD FOR OPERATING A LABORATORY AUTOMATION SYSTEM, LABORATORY AUTOMATION SYSTEM, AND LABORATORY IN-VITRO DIAGNOSTIC SYSTEM**

(71) Applicant: Roche Diagnostics GmbH, 68305 Mannheim (DE); F. Hoffmann-La Roche AG, 4070 Basel (CH)
(72) Inventor: MORCILLO MONTEJO, Alejandro, 08174 Barcelona (ES); POLO ESCUDERO, Sergio, 08174 Barcelona (ES)
(74) Representative: Bittner, Thomas L.

(57) **Abstract**

The present disclosure refers to a method for operating a laboratory automation system comprising a plurality of carriers, a transport plane, a control device (99), and a driving device. The method comprises: determining, in the control device (99), a first trajectory (109) between a first start plane position and a first destination plane position (107); moving the first carrier (101) along the first trajectory (109) from the first start plane position (108) to a current plane position (98) by the driving device; detecting an obstacle (104) preventing the first carrier (101) from continuing movement; providing obstacle information to the control device (99); determining, for the first carrier (101), an alternative first trajectory (109.1) between the current plane position (98) and one of the first destination plane position (107) and an alternative plane position, wherein the alternative first trajectory (109.1) is determined to circumvent the obstacle (104); moving the first carrier (101) along the alternative first trajectory (109.1) by the driving device; and determining a second trajectory between a second start plane position and a second destination plane position for the second carrier, wherein the second trajectory is determined to circumvent the obstacle (104). Further, a laboratory automation system and a laboratory in-vitro diagnostic system are provided.

## Description

The present disclosure refers to a method for operating a laboratory automation system. Further, the present disclosure refers to a laboratory automation system and to a laboratory in-vitro diagnostic system.

### Background

Laboratory automation systems are applied, in particular, for determining samples, for example samples of a bodily fluid, essentially automatically. The samples are typically received in sample vessels or containers which are processed via a laboratory automation system. The sample vessels or containers may be received from carriers. The carriers may be handled by a handling or distribution system. The handling or distribution system may move the carriers between different positions in the laboratory automation system.

For example, a laboratory sample distribution system is disclosed in document US 9 598 243 B2. The system disclosed in this document comprises a plurality of container carriers. The container carriers each comprise at least one magnetically active device such as, for example, at least one permanent magnet, and carry a sample container containing a sample. The system also comprises a transport device. The transport device comprises a transport plane to carry the plurality of container carriers and a plurality of electro-magnetic actuators stationary arranged below the transport plane. The electro-magnetic actuators move a container carrier placed on top of the transport plane by applying a magnetic force to the container carrier. The transport device also comprises a control device to control the movement of the container carriers on top of the transport plane by driving the electro-magnetic actuators. The control device controls the movement such that more than two container carriers are movable simultaneously and independently from one another.

The sample vessels may be moved along a line of processing for processing. For example, the sample vessels may be moved or relocated from a first working station to a second working station provided in the line of processing in the laboratory automation system. The working stations may also be referred to as working locations.

Document WO 2011 / 138 448 A1, for example, relates to a system for transporting containers between different stations, wherein the containers are accommodated in container carriers. The system comprises a control unit, which controls the transportation of the container carriers, a transporting surface, which is subdivided into sub-surfaces and on which the container carriers may be arranged in a movable manner, and drive means, wherein the drive means are activated by the control unit and one drive means in each case is assigned to one sub-surface in each case, wherein a drive means in each case is designed in order to provide an associated container carrier with driving power.

A sample distribution system having a transport surface on which sample container carriers may be moved is presented in document US 2015 / 0 276 782 A1. The sample distribution system has ambient-condition influencing device in order to influence ambient conditions over a sub-region of the transport surface in such a way that samples may be kept there for a certain time without impairment.

Document EP 3 095 739 A1 discloses a method of operating a laboratory sample distribution system. The laboratory sample distribution system comprises: a number of sample container carriers, wherein the sample container carriers are adapted to carry one or more sample containers, wherein the sample containers comprise samples to be analyzed by means of a number of laboratory stations, a transport plane, wherein the transport plane is adapted to support the sample container carriers, wherein the transport plane comprises a number of transfer locations, wherein the transfer locations are assigned to corresponding laboratory stations, and drive means, wherein the drive means are adapted to move the sample container carriers on the transport plane. The method comprises the steps: during an initialization of the laboratory sample distribution system, pre-calculating routes depending on the transfer locations, and after the initialization of the laboratory sample distribution system, controlling the drive means such that the sample container carriers move along the pre-calculated routes.

In document WO 2016 / 188 752 A1, a method of operating a laboratory automation system is disclosed. The laboratory automation system comprises: a number of laboratory stations, a number of sample container carriers, wherein the sample container carriers are adapted to carry one or more sample containers, wherein the sample containers comprise samples to be processed by means of the laboratory stations, a transport plane, wherein the transport plane is adapted to support the sample container carriers, wherein the transport plane comprises a number of transfer areas, wherein a transfer area of the number of transfer areas is assigned to a corresponding laboratory station of the number of laboratory stations, wherein samples are transferred to the laboratory stations by moving the corresponding sample container carrier to the assigned transfer area, and drive means, wherein the drive means are adapted to move the sample container carriers on the transport plane independent from one another along individual transport paths. The method comprises: monitoring, if more than one sample is waiting to be processed by a laboratory station, if more than one sample is waiting to be processed by the laboratory station, assigning a dynamic priority to the waiting samples according to at least one priority criteria, and moving the sample container carriers carrying the samples in the order of the assigned dynamic priority to the corresponding transfer area.

It is also possible that the carriers are not driven by an external drive, but drive themselves. In particular, the carriers may be autonomous.

Document WO 2012 / 158 520 A1 and document US 9 248 982 B2 each concern a laboratory product transport element for a laboratory transport system with an energy receiver and / or energy accumulator to provide drive power, at least one signal receiver to receive control signals, a control unit to generate drive signals as a function of at least one control signal obtained from the at least one signal receiver, movement devices for independent movement of the laboratory product transport element on a transfer path as a function of the drive signals of the control unit, in which the drive devices are driven by the drive power and at least one holder to hold a laboratory product being transported.

An automation system for an in vitro diagnostics environment is disclosed in document US 2015 / 0 025 678 A1. The system includes a plurality of intelligent carriers that include onboard processing and navigation capabilities. A central management controller may communicate wirelessly with the carriers to direct the carriers to carry a fluid sample to testing stations along a track within the automation system. The carriers control local motion and navigate decision points, such as forks in the track, to reach the appropriate testing station independently. The carriers may utilize landmarks and distance encoding to reach destinations accurately and quickly, including, for example, within less than the time for a single operation cycle of an automated clinical analyzer.

Current transportation systems handling samples in laboratory systems are not capable of efficiently adapting to problems in the transportation systems on the fly.

### Summary

It is an object of the present disclosure to provide improved technology for operating a laboratory automation system. In particular, it is an object of the present disclosure to provide improved technology for efficiently and flexibly adapting the operation of a laboratory automation system to overall transportation events that might occur in a laboratory environment.

For solving the problem, a method for operating a laboratory automation system according to the independent claim 1 is provided. Further, a laboratory automation system according to the independent claim 12 is provided. In addition, a laboratory in-vitro diagnostic system is provided according to the independent claim 13. Further embodiments are disclosed in dependent claims.

According to one aspect, a method for operating a laboratory automation system is provided. The laboratory automation system comprises a plurality of carriers configured to carry one or more sample containers and having a processor and a carrier data communication module, a transport plane, a control device separately provided from the plurality of carriers and having a processor and a control device data communication module configured to communicate with carrier data communication module of the carriers, and a driving device configured to move, in response to driving control signals, the plurality of carriers on the transport plane between plane positions. The method comprises: determining a first travel route for a first carrier from the plurality of carriers in the control device, the first travel route defining a first trajectory between a first start plane position and a first destination plane position; moving the first carrier along the first trajectory from the first start plane position to a current plane position on the transport plane by the driving device in response to receiving first driving control signals; detecting an obstacle preventing the first carrier from continuing movement along the first trajectory by a sensor device; providing obstacle information from the first carrier to the control device, the obstacle information being indicative of the obstacle detected; determining an alternative first travel route for the first carrier, the alternative first travel route defining an alternative first trajectory between the current plane position and one of the first destination plane position and an alternative plane position, wherein the alternative first travel route, in response to taking into account the obstacle information, is determined to circumvent the obstacle; moving the first carrier along the alternative first trajectory on the transport plane by the driving device in response to receiving alternative first driving control signals; and determining a second travel route for a second carrier from the plurality of carriers, the second travel route defining a second trajectory between a second start plane position and a second destination plane position for the second carrier, wherein the second travel route, in response to taking into account the obstacle information, is determined to circumvent the obstacle.

According to another aspect, a laboratory automation system is provided. The system comprises a plurality of carriers configured to carry one or more sample container and having a processor and a carrier data communication module; a transport plane; a control device separately provided from the plurality of carriers and having a processor and a control device data communication module configured to communicate with carrier data communication module of the carriers; and a driving device configured to move, in response to driving control signals, the plurality of carriers on the transport plane between plane positions. The laboratory automation system is configured to: determine a first travel route for a first carrier from the plurality of carriers in the control device, the first travel route defining a first trajectory between a first start plane position and a first destination plane position; move the first carrier along the first trajectory from the first start plane position to a current plane position on the transport plane by the driving device in response to receiving first driving control signals; detect an obstacle preventing the first carrier from continuing movement along the first trajectory by a sensor device; provide obstacle information from the first carrier to the control device, the obstacle information being indicative of the obstacle detected; determine an alternative first travel route for the first carrier, the alternative first travel route defining an alternative first trajectory between the current plane position and one of the first destination plane position and an alternative plane position, wherein the alternative first travel route, in response to taking into account the obstacle information, is determined to circumvent the obstacle; move the first carrier along the alternative first trajectory on the transport plane by the driving device in response to receiving alternative first driving control signals; and determine a second travel route for a second carrier from the plurality of carriers, the second travel route defining a second trajectory between a second start plane position and a second destination plane position for the second carrier, wherein the second travel route, in response to taking into account the obstacle information, is determined to circumvent the obstacle.

According to still another aspect, a laboratory in-vitro diagnostic system is provided, which comprises this laboratory automation system.

The technology provided allows for improved operation of the laboratory automation system with respect to detection and handling of events related to an obstacle present on the transport plane.

The detecting of the obstacle may comprise detecting the obstacle by a carrier sensor device provided on the first carrier. Alternatively or in addition, the obstacle may be detected by a carrier sensor device provided on a different carrier. Also, the obstacle may be detected by a sensor device provided by an observation module provided separately from the plurality of carriers. The obstacle may be detected by a sensor device provided by the transport plane, e.g. by one of the transport modules. The sensor device may provide obstacle data indicative of the obstacle information. The sensor device may provide the obstacle data to the control device. The sensor device may have a data connection to the carrier data communication module. The carrier data communication module may send obstacle data, i.e. obstacle information, to the control device data communication module, i.e. to the control device.

The sensor device may comprise at least one of the following sensors: line-following sensor configured to detect line markers (e.g., provided on the transport plane); collision sensor configured to detect objects in the near field; position sensor (e.g., configured to detect the position of a specific carrier on the transport plane); and reflective sensor configured to detect one or more position indicators (e.g., land marks). In some cases, the sensor device may include an RFID reader and / or near-field communication device. The position sensor may comprise a CCD camera (and corresponding software), a laser as in a laser mouse, and / or a ball as in a ball-type mouse. The sensor device may have radio sensors. In particular, the carrier data communication module may comprise radio sensors.

In response to detecting the obstacle, a warning / error may be transmitted to a lab manager.

The determining of the alternative first travel route may comprise at least one of (i) determining the alternative first travel route for the first carrier in the control device and providing first alternative control signals indicative of the alternative first travel route to the driving device; and (ii) locally determining the alternative first travel route for the first carrier in the first carrier.

Providing the first alternative control signals may comprise transmitting first alternative control signals from the control device data communication module to the driving device data communication module. Each control signal of the control signals may be indicative of a certain action that the control device may perform on the (first) carrier (such as stop, turn left, turn right, accelerate, break, etc.). Alternatively, providing first alternative control signals may comprise transmitting first alternative control signals from the control device data communication module to the (first) carrier communication module.

If the alternative first travel route is locally determined in the first carrier, route information indicative of the alternative first travel route may be provided from the (first) carrier to the control device. In response, the control device may then provide first alternative control signals indicative of the alternative first travel route. The control device may then provide the first alternative control signals to the driving device, e.g. the local driving device and / or central driving device.

The alternative first travel route may be calculated such that the detected obstacle location / area is not located on the alternative first travel route. However, the detected obstacle location may be point-like and the shape of the obstacle may be unknown. The alternative first travel route may be a safe alternative first travel route or a risky alternative first travel route. The closest distance between the safe alternative first travel route and the detected obstacle location may be relatively high. The closest distance between the risky alternative first travel route and the detected obstacle location may be relatively small. In particular, the closest distance between the safe alternative first travel route and the detected obstacle location may be higher than the closest distance between the risky alternative first travel route and the detected obstacle location. The alternative first travel route may be the shortest, fastest, or most (energy) efficient route between the current plane position and the first destination plane position. When the alternative first travel route is calculated, information of the detected obstacle may be taken into account. When the alternative first travel route is calculated, a risk metric (of the alternative first travel route) may be taken into account. If the risk metric of the alternative first travel route has a high value, the alternative first travel route may pass very close to the detected position of the obstacle. If the risk metric of the alternative first travel route has a small value, the alternative first travel route may not pass close to the detected position of the obstacle.

The (first) carrier may provide the first alternative control signals indicative of the alternative first travel route to the control device and / or to the driving device. The control device may forward the received route information indicative of the first alternative control signals from the carrier to the driving device, e.g. the central driving device.

The determining of the second travel route may comprise at least one (i) determining the second travel route for the second carrier in the control device and providing second control signals indicative of the second travel route to the driving device, and (ii) transmitting warning information comprising the obstacle information from the control device to the second carrier, and locally determining the second travel route for the second carrier in the second carrier.

Providing second control signals may comprise transmitting second control signals from the control device data communication module to the driving device data communication module. Alternatively, providing second control signals may comprise transmitting second signals from the control device data communication module to the (second) carrier communication module.

The second travel route may be provided from the (second) carrier to the control device. Determining the second travel route for the second carrier in the control device may comprise receiving the second travel route from the (second) carrier. The (second) carrier may provide second control signals indicative of the second travel route. The (second) carrier may provide the second control signals indicative of the second travel route to the control device and / or to the driving device. The control device may forward the received second control signals from the (second) carrier to the driving device, e.g. the central driving device.

The carrier may provide the second travel route to the control device. In reaction, the control device may then provide second control signals indicative of the second travel route. The control device may then provide the second control signals to the driving device, e.g. the local driving device and / or central driving device.

The second travel route may be calculated such that the detected obstacle location / area is not located on the second travel route. However, the detected obstacle location may be point-like and the shape of the obstacle may be unknown. The second travel route may be a safe second travel route or a risky second travel route. The closest distance between the safe second travel route and the detected obstacle location may be relatively high. The closest distance between the risky second travel route and the detected obstacle location may be relatively small. In particular, the closest distance between the safe second travel route and the detected obstacle location may be higher than the closest distance between the risky second travel route and the detected obstacle location. The second travel route may be the shortest, fastest, or most (energy) efficient route between the second start plane position and the second destination plane position of the second carrier. When the second travel route is calculated, a risk metric of the second travel route may be taken into account. If the risk metric of the second travel route has a high value, the second travel route may pass very close to the detected position of the obstacle. If the risk metric of the second travel route has a small value, the second travel route may not pass close to the detected position of the obstacle.

The providing of the obstacle information may comprise providing obstacle information indicative of at least one of: (i) an obstacle plane position, (ii) a topology of the obstacle; (iii) driving force not available in a plane area comprising the obstacle plane position, (iv) a (first) obstacle sub-area of the transport plane covered by the obstacle on the transport plane, (v) topography of a (second) obstacle sub-area comprising the obstacle plane position, (vi) one or more neighboring carriers located in the vicinity of the obstacle, and (vii) damage of surface for at least one of obstacle plane position and the obstacle sub-area comprising the obstacle plane position.

Further, obstacle information may be indicative of a shape of the obstacle. The obstacle plane position and the shape of the obstacle may (exactly) define an area on the transport plane that is not accessible for carriers. The shape of the obstacle may correspond to the topology of the obstacle. The topology of the obstacle may be indicative of the spatial structure of the obstacle.

The obstacle information may at least comprise the (detected) position of the obstacle (obstacle plane position). The obstacle information may comprise the subarea-ID, the grid-ID, and / or the module-ID, which correspond to the obstacle. The subarea-ID, the grid-ID, and / or the module-ID of the respective subarea, grid, and / or module, which comprise the obstacle, may correspond to the obstacle. The obstacle information may be transmitted from the first carrier to the control device. The obstacle information may be sent by the carrier data communication module and may be received by the control device data communication module.

The obstacle plane position may be indicative of the location of the obstacle on the (transport) plane. The obstacle plane position may be indicative of a point-like position. The obstacle plane position may be located in the obstacle. The obstacle plane position may be indicative of a position in three-dimensional space. The obstacle plane position may be indicative of a position in two-dimensional space, in particular in the two-dimensional plane comprising the transport plane. A plurality of obstacle plane positions may correspond to the same obstacle. The plurality of obstacle plane positions may be comprised by the obstacle's dimension. The plurality of obstacle plane positions may be indicative of the shape of the obstacle. The obstacle plane position may be indicative of the center of mass, center of volume, or center of area of the obstacle. The obstacle plane position may be indicative of a (vertical) projection of the center of mass, center of volume, or center of area of the obstacle onto the transport plane.

The obstacle may correspond to a (transport) plane area that is not working. That is, in this area, the driving device may not be able to move the carriers. In other words, the carriers in this area may not be able to be moved by the driving device. This area may be a defect area. Obstacle information indicative of: driving force not available in a plane area comprising the obstacle plane position may correspond to this defect area. The defect area may comprise one or more subareas, grid sections, and / or transport modules. These subareas, grid sections, and / or transport modules may lack of driving force. These subareas, grid sections, and / or transport modules may be defect subareas, grid sections, and / or transport modules. The obstacle information may be indicative of defect subareas, grid sections, and / or transport modules. The obstacle information may be indicative of subarea-IDs, grid-IDs, and / or module-IDs corresponding to the defect subareas, grid sections, and / or transport modules.

The obstacle may correspond to a physical disturbance object on the transport plane. Obstacle information indicative of: a (first) obstacle sub-area of the transport plane covered by the obstacle on the transport plane may correspond to the physical disturbance object. In a top view, a certain area of the transport plane may not be visible (due to the obstacle / the disturbance object). This area may be the first obstacle sub-area. Alternatively, the first obstacle sub-area is a contact surface between the transport plane and the obstacle / disturbance object. Further, in a top view, certain subareas, grid sections, and / or transport modules may not be visible (not at all or partially not) because of the obstacle / disturbance object. These subareas, grid sections, and / or transport modules may be (completely or partially) covered subareas, grid sections, and / or transport modules. The (completely or partially) covered subareas, grid sections, and / or transport modules may form the first obstacle sub-area. Alternatively, the subareas, grid sections, and / or transport modules (completely or partially) contacting the obstacle / disturbance object may form the first obstacle sub-area. Obstacle information indicative of the first obstacle sub-area may at least comprise obstacle sub-area positions indicative of the contour of the obstacle and / or the contour of the first obstacle sub-area. The obstacle / disturbance object may correspond to a fluid and / or a solid.

Information of the topography of the second obstacle sub-area are indicative of properties of the surface of the transport plane within the second obstacle sub-area. The properties of the surface may comprise forms and features of surface. In particular, properties of the surface may comprise adhesion, purity, roughness, defects, and / or furrows of the surface. Information of the topography of the second obstacle sub-area may correspond to information of the topography of the corresponding subareas, grid sections, and / or transport modules.

A carrier located in the vicinity of the obstacle may be located in the vicinity of the obstacle plane position. A carrier located in the vicinity of the obstacle may be located in the vicinity of the plane area comprising the obstacle plane position, the (first) obstacle sub-area of the transport plane covered by the obstacle on the transport plane, and / or the (second) obstacle sub-area comprising the obstacle plane position. The term vicinity may correspond to a small distance. A small distance may be 0.1 to 10 times the size of the carrier. Alternatively, a small distance may be the distance that the carrier travels in 0.01 to 10 s at current speed. Alternatively, a small distance may be the distance that the carrier travels in 0.01 to 10 s at max. speed. Alternatively, a small distance may be 1 to 10 times the braking distance (until stop) of the carrier. A small distance may also be 0.1 to 10 times the size of one transport module's surface.

The plane area comprising the obstacle plane position, the (first) obstacle sub-area of the transport plane covered by the obstacle on the transport plane, and the (second) obstacle sub-area comprising the obstacle plane position can, but do not have to, be different in pairs. Alternatively, these areas may be the same area. Each of these areas may each comprise corresponding subareas, grid sections, and / or transport modules (with respective subarea-IDs, grid-IDs, and / or module-IDs). At least one of these areas may (essentially exactly) define the area on the transport plane that is not accessible for carriers (at least not without inconveniences). Obstacle information may be linked to corresponding subarea-IDs, grid-IDs, and / or module-IDs.

The providing of the obstacle information may comprise, in response to receiving the obstacle information, storing no-access information in the control device, the no-access information being indicative of at least one of the obstacle plane position and the obstacle sub-area comprising the obstacle plane position being not accessible.

The obstacle sub-area comprising the obstacle plane position may be exemplified as one of the plane area comprising the obstacle plane position, the (first) obstacle sub-area of the transport plane covered by the obstacle on the transport plane, and the (second) obstacle sub-area comprising the obstacle plane position. No-access information may comprise points, areas, and / or contours corresponding to the obstacle. No-access information may be taken into account when determining travel routes. Travel routes may be determined such that the determined travel routes do not cross the obstacle plane position and / or the obstacle sub-area comprising the obstacle plane. The no-access information may be stored (erasable) in a memory of the control device. No-access information may be used to block the obstacle plane position. In particular, no-access information may be indicative for blocking the obstacle sub-area comprising the obstacle plane position. The risk metric and / or no-access information may be taken into account when determining travel routes.

The method for operating a laboratory automation system may further comprise: moving one of the second carrier and a third carrier from the plurality of carriers to an obstacle observing plane position, determining supplementary obstacle data indicative of supplementary information about the obstacle, and transmitting the supplementary obstacle information from the second or third carrier to the control device by data communication. First detection of the obstacle may result in providing (first) obstacle information. However, the first obstacle information may merely relate to a first part of the obstacle. Thus, it may lack of obstacle information relating to the (entire) obstacle.

One of the plurality of carriers different from the first carrier may be moved to an obstacle observing plane position. The obstacle observing plane position may be in a vicinity of the obstacle. The supplementary information about the obstacle may correspond to obstacle information different from the first obstacle information. Supplementary information about the obstacle may relate to a second part of the obstacle. The first and the second part of the obstacle may be different, at least in sections. The supplementary information and the (first) obstacle information may be of different type. For example, the (first) obstacle information may correspond to the position of the obstacle, whereas the supplementary information may relate to the type of obstacle (e.g., lack of driving force, physical disturbance). Alternatively, the (first) obstacle information may correspond to a roughly determination of the obstacle plane position, whereas the supplementary information relate a more detailed information of the obstacle plane position. By linking (first) obstacle information and supplementary information, further obstacle information may be determined. In particular, many determined obstacle plane positions may be linked to form an exact obstacle plane position, the shape of the obstacle and / or the obstacle sub-area (essentially exactly) comprising the obstacle plane position. The carrier performing such an observation may be an observation carrier. The second carrier or the third carrier may be the (first) observation carrier. The control device may perform this linking.

The observation carrier may repeat determining supplementary obstacle data in a plurality of observing plane positions. The plurality of observing plane positions may be located circumferential around the obstacle. The supplementary obstacle data thus determined may be indicative of the shape of the obstacle, in particular of a dimension of the obstacle. One or more defective transport modules may be detected. In reaction, defect transport modules may be replaced. The observation carrier may not ne carrying a sample and / or a sample container, i.e. the observation carrier may be empty.

The observation carrier may detect that the obstacle has disappeared. In this case, the stored no-access information may be deleted. The area / position corresponding to the disappeared obstacle may be used again for further transport routes. Alternatively, a lab user may detect that the obstacle has disappeared. The user may make a corresponding input to an input device connected to the control device. In response to such input, the no-access information may be deleted.

The determining of the supplementary obstacle data may comprise detecting sensor signals by a (further) sensor device provided with the second or third carrier.

The determining of the supplementary obstacle data may comprise detecting sensor signals by a (further) sensor device provided with one of the plurality of carriers different from the first carrier.

The further sensor device may be an observation sensor device. The observation sensor device may be different from the sensor device of the first carrier. The observation carrier may have the observation sensor device. The observation carrier may be configured to precisely determine information of the obstacle. The observation sensor device may have more precise sensors than the sensor device of the first carrier. The observation sensor device may have more precise sensors than sensor devices of the other carriers of the plurality of carriers. The observation sensor device may have more sensors than the sensor device of the first carrier and / or the sensor devices of the other carriers of the plurality of carriers.

More than one observation carrier may be provided. Each of the observation carriers may be configured for precisely determining different information of the obstacle, i.e. different supplementary obstacle data. For example, a first observation carrier may determine first supplementary obstacle data indicative of the topography of the obstacle. A second observation carrier may determine second supplementary obstacle data indicative of the position of the obstacle.

The method for operating a laboratory automation system may further comprise individually registering each of the plurality of carriers with the control devices, wherein the registering comprises proving capability data indicative of functional capabilities provided by the carrier from the carrier to the control device. Each carrier may be individually assigned to the associated carrier-ID. In the control device, the carrier IDs may be linked to the capability data of the corresponding carrier, e.g. in form of a list.

The capability data may be indicative of the carrier type (normal carrier, observation carrier, etc.), the number of similar carriers, capacity for carrying sample container (e.g., "1" if the carrier is loaded with one sample container and "0" if the carrier is empty), motion characteristics / moving parameters, sensor capabilities, condition (e.g., damaged or intact), and / or energy level. Sensor capabilities may be indicative of the sensor type (camera sensor, temperature sensor, distance sensor, lidar sensor, radio sensor, touch sensor, etc.), number of sensors, and / or precision of each sensor.

The motion characteristics / moving parameters may be indicative of a current speed, a current acceleration, a current position, a maximum speed, a maximum acceleration, a braking distance, and / or a moving direction.

The method for operating a laboratory automation system may further comprise, in the control device: evaluating capability data for the second and third carrier, and selecting one of the second and third carriers for moving to the obstacle observing plane position depending on the evaluation of the capability data.

The selecting may be based on the sensors comprised by the sensor device of the second carrier and the sensors comprised by the sensor device of the third carrier. The carrier that has more sensors may be selected. The carrier that has more precise sponsors may be selected. It may first be evaluated which further information of the obstacle are needed. Needed obstacle information may be unknown obstacle information or obstacle information with a high uncertainty. The carrier that has the sensor device that is best suited to determine the needed obstacle information may be selected. The carrier that is closer to the obstacle location may be selected. If one of the carriers is the observation carrier, the observation carrier may be selected. The selected carrier may be the observation carrier. The empty carrier may be selected. At least some of these selection factors may have a certain weighting. At least some or all these selecting factors may influence the selection. The selection may be based on a part of these selecting factors and the corresponding weightings. For example, the third carrier may be selected because the third carrier has better sensors than the second carrier, even though the second carrier is located closer to the obstacle. In this case, the quality of the sensors is higher weighted than the distance to the obstacle.

The method for operating a laboratory automation system may further comprise: providing condition information from the first carrier to the control device in response to detecting the obstacle, wherein the condition information is indicative of a condition of operation for the first carrier, in response to receiving the condition information, selecting an operation mode from a plurality of operation modes applicable for the first carrier, and determining the alternative first travel route, thereby, implementing the operation mode selected.

The operation mode may be one of the following. The operation mode may comprise rerouting of the first carrier, e.g. around the obstacle and to the first destination plane position. The operation mode may comprise docking of the first carrier for maintenance operation (e.g., after or before the first carrier reached the first destination plane position). The operation mode may comprise docking of the first carrier for charging (e.g., after or before the first carrier reached the first destination plane position). The operation mode may comprise docking the first carrier to a sample picking unit for the purpose of moving the sample from a defective carrier to a non-defective carrier. The non-defective carrier may then be routed to the first destination plane position.

In the maintenance operation, it is checked whether the carrier is damaged, e.g. by hitting the obstacle.

These operation modes are provided in order to keep the system always in peak performance and also implicate, for example, that there is a *"buffer"* of unused carriers that are always available for replacing a carrier which has developed an issue.

The observation carrier may slowly move around the obstacle and may contour and map the obstacle. Detected obstacle information data may comprise corresponding contouring and mapping data. After said corresponding contouring and mapping, the observation carrier proceeds to the normal transport at normal speed and informs the control device. The contouring event will allow the control device to have the exact shape of the obstacles location.

In response to determining the obstacle information indicative of the position of the obstacle, the control device may determine if travel routs of other carriers would pass through this position of the obstacle. A pre-calculated travel route of the second carrier may pass through this position of the obstacle. The second start plane position may be the current plane position of the second carrier. The pre-calculated travel path may be replaced by the determined second travel route for the second carrier.

There might be an obstacle in the full length of the transport plane. The first alternative travel route then determined may lead via another transport plane adjacent to the transport plane.

The control device may have total awareness of every carrier of the plurality of carriers and may receive information from them and from additional devices that are part of the laboratory automation system via telemetry systems (e.g. NFC, WIFI, Temp, etc.).

The virtual representation of the routing of the carriers may be assigned to an artificial intelligence (the artificial intelligence may be switched / improved at any time as it learns with the lab shifts). Within the virtual world, the carrier's capabilities may be enhanced (e.g. knowledge about their environment). The control device may use all this information to calculate the paths and then inform the carriers about the moves they need to perform considering all the previously mentioned aspects.

Following, further aspects are described.

The laboratory automation system may be provided with a transport device or system comprising a plurality of transport modules. Each transport module may be provided with a transport surface. The driving device may be configured to move the (sample vessel) carriers on the transport surface. The transport plane may be formed by transport surfaces of transport modules of an arrangement of transport modules. The control device or system may be configured to control operation of the driving device. To each of the transport modules a module-ID may be assigned.

The transport plane may comprise at least one transport plane region divided into grid areas. The grid areas may be of identical size. The grid areas may at least partially form subareas. The grid areas may be rectangles. A specific grid area and / or a specific subarea may correspond to a transport surface of a specific transport module. The transport surfaces of the transport modules may each from exactly one subarea and / or grid area. To each of the grid areas a grid-ID may be assigned and / or to each of the subareas a subarea-ID may be assigned. The respective IDs may be registered or captured by the control device. The subarea-ID, the grid-ID, and the module-ID each correspond to positions on the transport plane.

The transport device or system may provide for a sample or specimen distribution system in the laboratory system. The sample or specimen distribution system may comprise a plurality of (container) carriers. The carriers may be self-powered, or not. The carriers may comprise at least one magnetically active, i.e. magnetically attractive, device. The carriers may carry a single sample container.

The transport plane may be a two dimensional transport plane, and / or may carry at least a part of the plurality of carriers. The transport device may further include a plurality of electro-magnetic actuators. The electro-magnetic actuators may be arranged stationary or fixed below the transport plane. The driving device may comprise these actuators. The driving device, in particular the electro-magnetic actuators, may move a carrier on top of the transport plane in at least two different directions, e.g. by applying or causing a magnetic force to the container carrier, i.e. to the magnetically active device of the container carrier. This magnetic force may be provided in response to the driving control signals. The driving control signals may be provided by the control device.

The control device may control the movement of the carriers, in particular, such that more than two carriers may be movable simultaneously and independently from one another. Simultaneously may indicate that during a certain time interval at least two container carriers move. Independently may indicate that the container carriers may be moved, for example, in different directions, with different speeds, along different paths, and starting the movement at different points in time. The control device may be incorporated as a personal computer running control software. The control device may have information indicative of the positions of at least a part or all of the plurality of carriers.

The transport plane may comprise insertion areas for manually and / or automatically placing / inserting carriers on the transport plane. Accordingly, the transport plane may comprise removal areas for manually and / or automatically removing container carriers and / or sample containers from the transport plane. The transport plane may be covered such that only the insertion areas and the removal areas may be accessible by a user to prevent unwanted manipulation.

The transport plane may comprise at least one transfer area located adjacent to a laboratory station (also called laboratory device) and / or an automatic transfer device. The transfer area may store a plurality of container carriers for sequentially processing by the laboratory station or the automatic transfer device. The transfer area may provide a dynamic processing queue for a corresponding laboratory station, thereby enabling a flexible load balancing.

Each carrier may have a carrier-ID. The carriers may comprise a RFID tag storing a unique ID. This may enable matching between a sample-ID and / or container-ID, for example, a barcode, and the corresponding carrier-ID.

The transport plane may be divided into a plurality of the subareas. Each subarea may have a first outer face, a second outer face, a third outer face and a fourth outer face at which further planes may be arranged in a tiling manner to form a transport plane. This approach may offer the ability to provide transport planes of desired shape.

As described above, the carriers may be self-powered or not self-powered. The self-powered carriers may be actively driven. The not self-powered carriers may be passively driven. At least a part of the carriers may be passively driven, e.g. by a central driving device. The driving device may comprise the central driving device. The central driving device may (independently) apply a force to each of the not self-powered carrier on the transport plane. At least a part of the carriers may be actively driven, e.g. by local driving devices, e.g. by driving devices in each of the self-powered carrier. The local driving devices, e.g. the driving devices in each of the self-powered carrier, may be comprised by the driving device.

The plurality of carriers may have different designs. In particular, the plurality of carriers may have different sensors and / or different motion characteristics (such as max. acceleration or max. speed).

The first travel route may be entirely comprised by the transport plane. The first start plane position and the first destination plane position may be located on the transport plane. Both positions may be spaced apart from each other. The first travel route may be calculated and provided by the control device. The control device may transmit driving control signals indicative of the first travel route to the driving device. These data may be sent from the control device data communication module and received from a driving device data communication module. In response, the first carrier is moved along the first travel route by the driving device. The first travel route may be the shortest, fastest, or most (energy) efficient route between the first start plane position and the first destination plane position.

The current (plane) position may be located on the first travel route between the first start plane position and the first destination plane position. The current position may be the position at which the first carrier is located when the obstacle is (initially) detected. The obstacle may be detected by the first carrier, e.g. by sensors of the first carrier. Sensors by the first carrier may be comprised by the sensor device. Sensors by the first carrier may be optical sensors or other type of radar sensors (lidar). The first carrier may detect information of the obstacle. The term "preventing the first carrier from continuing movement along the first trajectory" may or cannot imply that the first carrier stops. The first carrier may be prevented from moving along the first trajectory if the obstacle is detected on the first trajectory between the current position and the first destination plane position. The first carrier may be prevented from continuing movement along the first trajectory if the obstacle is right in front of the first carrier. That is, the first carrier has collided with the obstacle or the first carrier is about to collide with the obstacle. The first carrier may be prevented from moving if the first carrier has collided with the obstacle. However, the first carrier may also be prevented from continuing movement along the first trajectory once it is first detected that the obstacle is on the first trajectory (between the current position and the first destination plane position). This case may also occur when the obstacle and the first carrier are far away from each other.

With respect to the laboratory automation system and the laboratory in-vitro diagnostic system, the embodiments described above for the method for operating a laboratory automation system may be provided accordingly.

### Description of further embodiments

In the following, embodiments, by way of example, are described with reference to figures. In the figures, show:
- Fig. 1: a graphical representation of one carrier;
- Fig. 2: a flow chart of an exemplary method for operating a laboratory automation system;
- Fig. 3: a graphical representation of a first exemplary snapshot of the transport plane, comprising an exemplary obstacle, with carriers and the control device;
- Fig. 4: a graphical representation of a second exemplary snapshot of the transport plane, comprising an exemplary obstacle, with carriers and the control device;
- Fig. 5: a graphical representation of a third exemplary snapshot of the transport plane, comprising an exemplary obstacle, with carriers and the control device;
- Fig. 6: a graphical representation of an exemplary position determination of one carrier;
- Fig. 7: a simplified workflow example when an obstacle is detected; and
- Fig. 8: a graphical representation of an exemplary driving device.

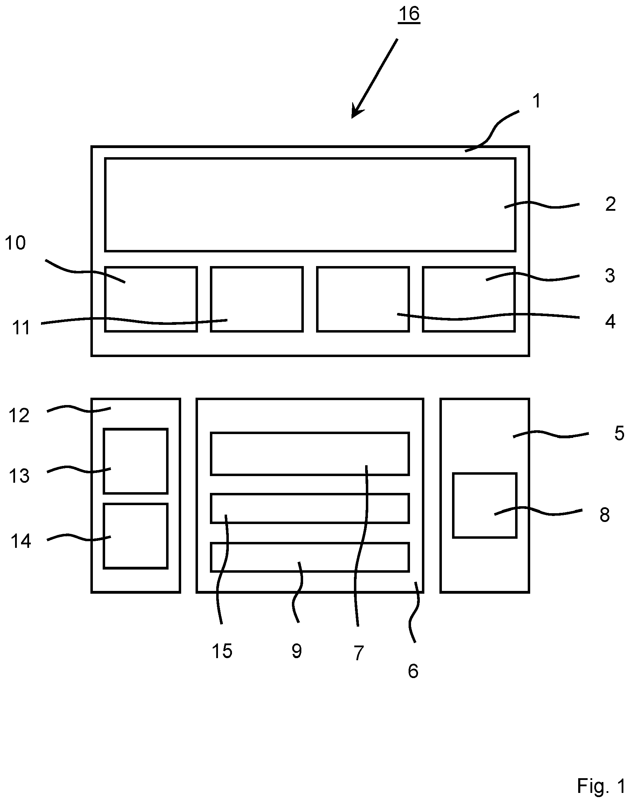

Fig. 1 shows a graphical representation of one carrier 16. The exemplary carrier 16 of Fig. 1 may comprise a motion control unit 1. The motion control unit 1 may determine travel routes in the travel route generation unit 2. Determining travel routes in the travel route generation unit 2 may comprise providing a received travel route. Alternatively, the travel route generation unit 2 may calculate travel routes or at least parts of travel routes on its own. Moreover, the travel route generation unit 2 may be configured to transform a received travel route / trajectory in corresponding driving control signals. However, driving control signals are preferably determined by the control device 99. The travel route generation unit 2 may not be comprised by the carrier 16, but by the control device 99 or the driving device 17.

In addition, the carrier 16 may comprise an actuator controller 10. The actuator controller 10 may provide the driving control signals. The actuator controller 10 may provide the driving control signals to the actuators 12, in particular, to the local driving device. The actuator controller 10 may be connected with the actuators 12.

Further, the carrier 16 may comprise a position controller 11. The position controller 11 may detect the current position 98 of the carrier 16. The current position may be determined via trilateration. The current position may be determined via detecting at least two land marks. The current position may also be determined via triangulation. In addition, the current position may be calculated based on a starting point (and subsequent motion / subsequent driving control signals). The current position may be calculated by means of a CCD camera, a laser as in a laser mouse, and / or a ball as in a ball-type mouse.

The carrier 16 may further comprise a collision controller 4. The collision controller 4 may prevent the carrier 16 from a collision with another carrier 16 and / or with an obstacle, in particular, with an unknown obstacle, e.g. with a foreign obstacle (foreign with respect to the laboratory automation system).

Moreover, the carrier 16 may comprise a communication controller 3. The communication controller 3 may be configured to manage the communication of the carrier 16 with other devices of the system and / or another carrier 16. Data may be received by a carrier data communication module 5. The carrier data communication module 5 may be comprised by the carrier 16. The carrier data communication module 5 may receive and / or send data via a communication interface 8. The communication interface 8 may communicate via electro-magnetic radiation, e.g. via WiFi.

Further, the carrier 16 may comprise a sensor device 6. The sensor device 6 may be configured to determine data indicative of the environment of the carrier 16 and / or the carrier 16 itself. In particular, the sensor device 6 may determine obstacle information. The sensor device 6 may comprise one or more sensors 7, 9, 15. The sensor device 6 may comprise a thermometer, an accelerometer, a gyroscope, and / or a magnetometer 7. Additionally or alternatively, the sensor device 6 may comprise a collision detector, e.g. an ultrasonic sensor and / or IR sensor 15. Additionally or alternatively, the sensor device 6 may comprise a Bluetooth sensor.

The carrier 16 may comprise actuators 12. The carrier 16 may comprise sample tube capture / release actuators 13. In addition or alternatively, the carrier 16 may comprise may comprise an active or a passive moving unit 14. The passive moving unit 14 may receive a driving force from externally, e.g. by a central driving device. The active moving unit 14 may provide the driving force on its own. The active moving unit 14 may be comprised by the local driving device. The active moving unit 14 may comprise driving motors. The carriers 16 and the control device 99 may communicate with each other via over the air links 111.

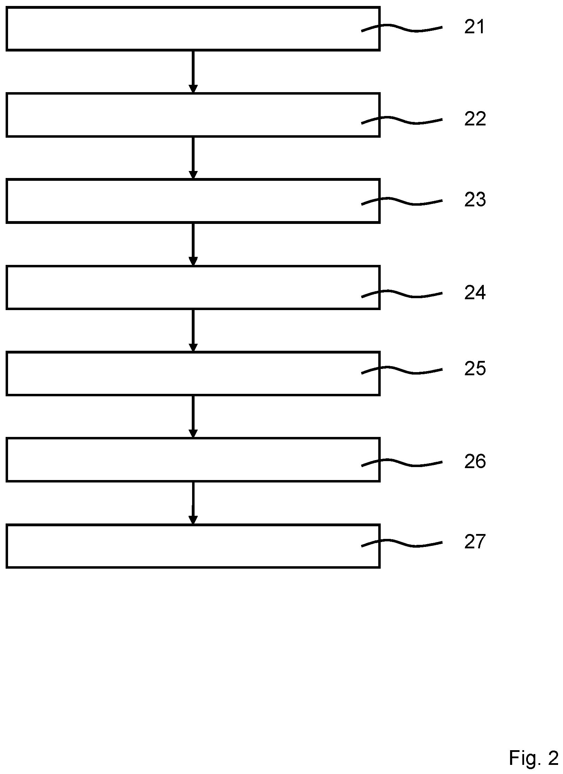

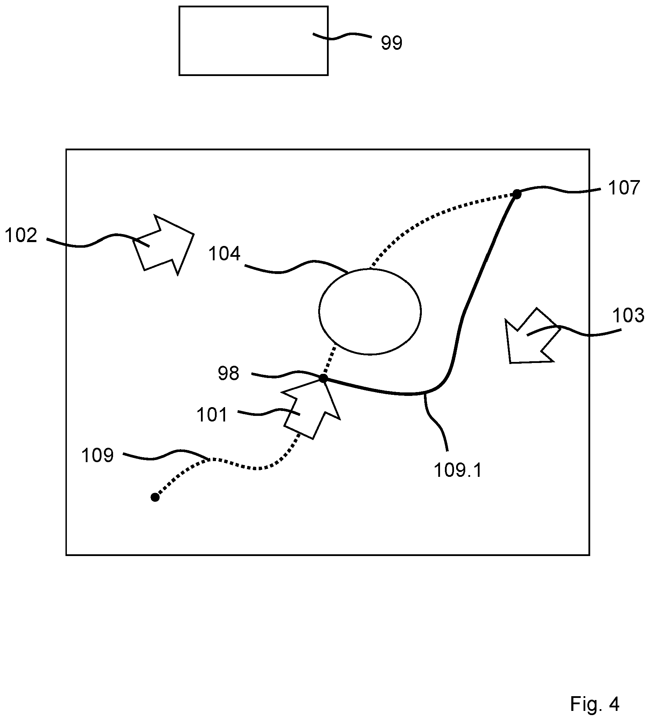

Fig. 2 shows a flow chart of an exemplary method for operating a laboratory automation system. The method may comprise the steps: first determining step 21, first moving step 22, detecting step 23, providing step 24, second determining step 25, second moving step 26, and third determining step 27. Those steps may be executed in order. In the following, the individual steps are described in more detail with reference to the Figs. 4 to 5.

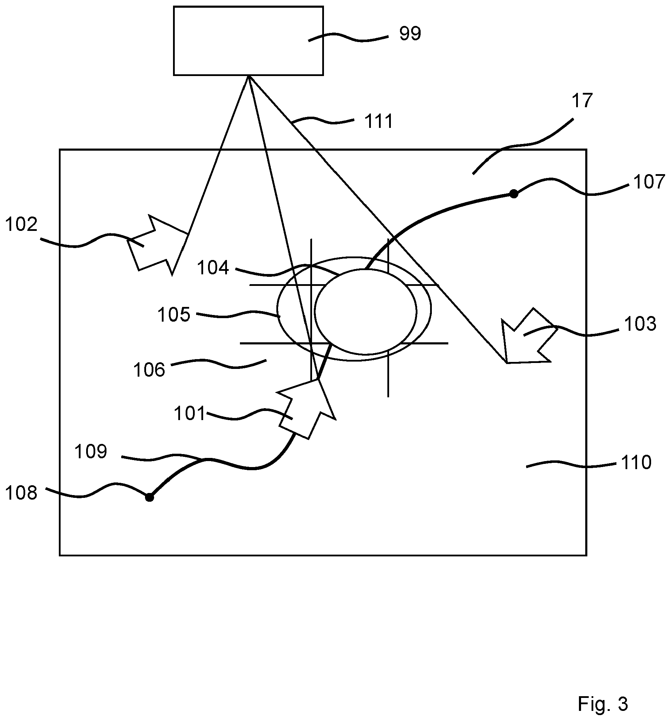

In the first determining step 21, a first travel route 109 for a first carrier 101 from the plurality of carriers 16 may be determined in the control device 99, e.g. by machine learning methods. The first travel route 109 defines a first trajectory 109 between a first start plane position 108 and a first destination plane position 107 for the first carrier 101. The first trajectory 109 is illustrated in Fig. 3.

In the first moving step 22, the first carrier 101 may be moved along the first trajectory 109 from the first start plane position 108 to a current plane position 98 on the transport plane 110 by the driving device 17 in response to receiving first driving control signals. Fig. 4 shows an example of the first carrier 101 being at a current position 98. The driving control signals may be provided by the control device 99.

In the detecting step 23, an obstacle 104 preventing the first carrier 101 from continuing movement along the first trajectory 101 may be detected by a sensor device 6. The position, at which the obstacle 104 is detected, may be the current position 98. The obstacle 104 may be detected by the first carrier 101. Alternatively, the obstacle 104 may be detected by an observation module. The observation module may provide information indicative of the obstacle 104 to the first carrier 101.

In the providing step 24, obstacle information may be provided from the first carrier 101 to the control device 99. The obstacle information are indicative of the obstacle 104 detected. The obstacle information may be indicative of an area 105 comprising the obstacle 104. The area 105 and the contour of the obstacle 104 may be equal. The obstacle information may be indicative of grids / subareas / transport modules 106 that are completely covered by the obstacle 104. In Fig. 3 one grid / subarea / transport module 106 is completely covered by the obstacle 104. In Fig. 3, grids / subareas / transport modules 106 are exemplarily represented by the same symbols. However, it is clear that the grids / subareas / transport modules 106 may be different from each other and, in particular, may have different sizes and shapes. The obstacle information may be indicative of grids / subareas / transport modules 106 that are partly covered by the obstacle 104. In Fig. 3, six grids / subareas / transport modules 106 are partly covered by the obstacle 104.

In the second determining step 25, an alternative first travel route 109.1 for the first carrier 101 may be determined. The alternative first travel route 109.1 is illustrated in Fig. 4. The alternative first travel route 109.1 may define an alternative first trajectory 109.1 between the current plane position 98 and the first destination plane position 107 for the first carrier 101. The alternative first travel route 109.1, in response to taking into account the obstacle information, is determined to circumvent the obstacle 104. The second determining step 25 may take into account a risk metric. If the risk metric has a high value, the alternative first travel route 109.1 bypasses the obstacle 104 as closely as possible. If the risk metric has a small value, the alternative first travel route 109.1 bypasses the obstacle 104 by a wide margin.

In the second moving step 26, the first carrier 101 may be moved along the alternative first trajectory 109.1 on the transport plane 110 by the driving device 17 in response to receiving alternative first driving control signals. The alternative driving control signals may be provided by the control device 99.

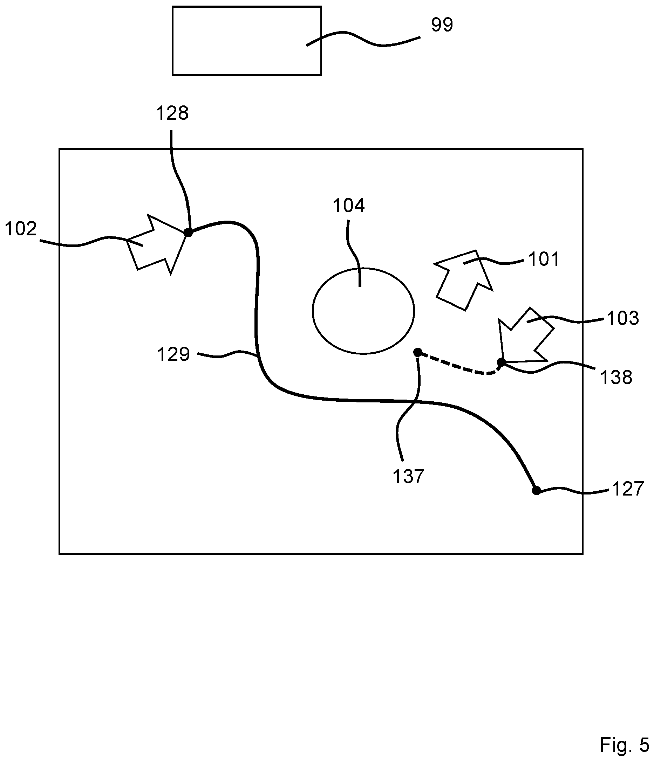

In the third determining step 27, a second travel route 129 for a second carrier 102 from the plurality of carriers 16 may be determined. An example of the second travel route 129 is illustrated in Fig. 5. The second travel route 129 may be determined by the control device 99. The second travel route 129 defines a second trajectory 129 between a second start plane position 128 and a second destination plane position 127 for the second carrier 102. The second travel route 129, in response to taking into account the obstacle information, is determined to circumvent the obstacle 104. Analogous to the determination of the alternative first travel route 109.1, a risk metric may again be taken into account.

Fig. 5 also relates to an observation step. The third carrier 103 may be selected as an observation carrier 103 for gathering more information of the obstacle 104. The third carrier 103 may be moved from a current position 138 of the third carrier 103 to an observation position 137. The observation carrier 103 may smay the obstacle 104 and may send corresponding data to the control device 99. The control device may adapt the determining step for calculating routes for carriers based on the supplementary data of the obstacle 104 provided by the observation carrier 103. In particular, the risk metric may be adapted thereon.

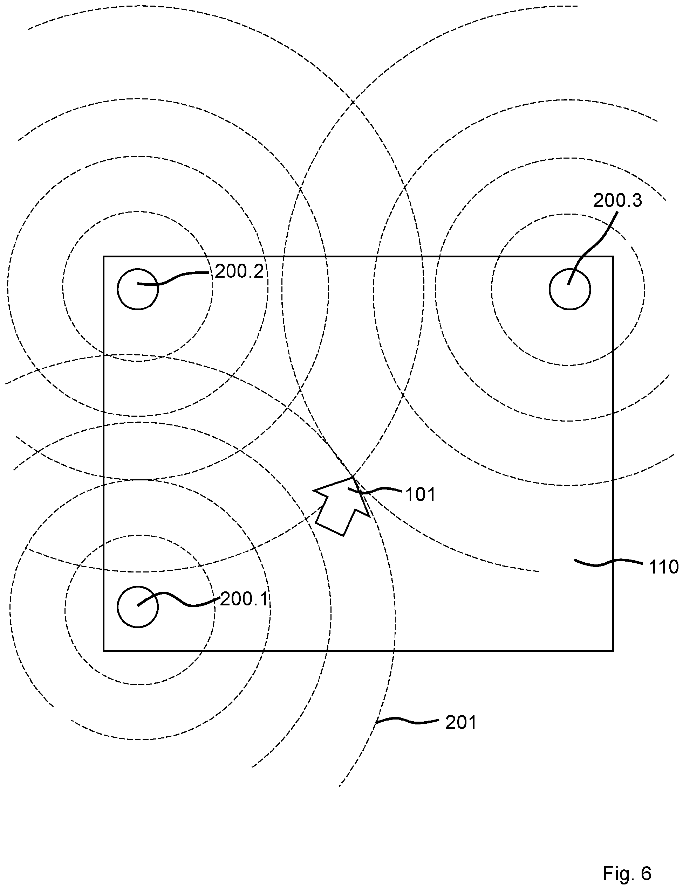

Fig. 6 shows a graphical representation of an exemplary position determination of a carrier. The carrier whose current position shall be detected may exemplarily be the first carrier 101. The position may be detected via trilateration. While triangulation is based on the measurement of three angles, trilateration may be based on distance measurements to three points. The distances between the first carrier 101 and each of the reference points 200 may be determined. The distances between the first carrier 101 and a first reference point 200.1, a second reference point 200.2, and a third reference point 200.3 may be determined. On the basis of these distances (and one reference position), the current position of the first carrier 101 may be determined. The three reference points may be (GPS) satellites. The three reference points may be transmitters located in or nearby the system, e.g. iBeacons. The reference points may broadcast signals 201. In the first carrier, the distances may be determined by determining the amplitudes of the signals 201 from each of the reference points 200.

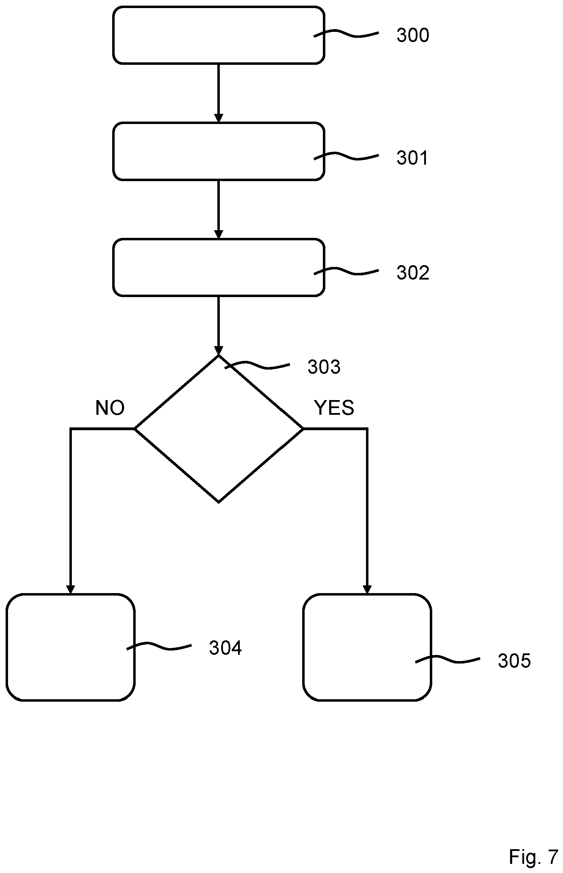

Fig. 7 shows a simplified workflow example when an obstacle 104 is detected. The workflow is provided for determining the second travel route 129 as soon as a pre-calculated second travel route is flagged as not valid and / or any issue that impairs the route is detected, e.g. the obstacle 104 blocks the pre-calculated second travel route. Therefore, the system performs recalculations of travel routes as soon as an event of the nature mentioned above occurs. For determining the second travel route 129, the workflow takes into consideration several factors, e.g. whether the route corresponds to existing and active transport modules and / or whether the route corresponds to collisions with other carriers and / or the route may be followed by the current carrier (i.e., the current carrier should have enough battery, or other mechanical constrains as an example).

In step 300, a transport order may be received. Based on the transport order, in step 301, the control device 99 may determine an (optimal) travel route for the corresponding carrier. For example, the corresponding carrier may be the second carrier 102. The thus determined travel route may be the pre-calculated second travel route for the second carrier 102. In step 302, the second carrier 102 may be moved along the pre-calculated second travel route by the driving device 17.

Step 303 may comprise a decision module. The decision module may be triggered by either a message sent from one of the carriers 16 or the control device 99 itself. The trigger may be provided by the sensor device of one of the carriers 16, i.e. the trigger may be indicative of something that one of the carriers 16 detects while moving. What is detected may be something that occurs within the travel route of one of the carriers 16, e.g. an obstacle. If the decision module is not triggered, it is continued with step 304. In step 304, the second carrier 102 continues moving on the pre-calculated second travel route. If the decision module is triggered, it is continued with step 305. The position at which the second carrier 102 is located at the time the decision module is triggered may be a current position of the second carrier 102. In step 305, the second travel route 129 for the second carrier 102 may be determined. The second travel route 129 defines a second trajectory between a second start plane position 128 (e.g., the current position of the second carrier 102) and a second destination plane position 127 for the second carrier 102. The second travel route 129, in response to taking into account the obstacle information, may be determined to circumvent the obstacle 104.

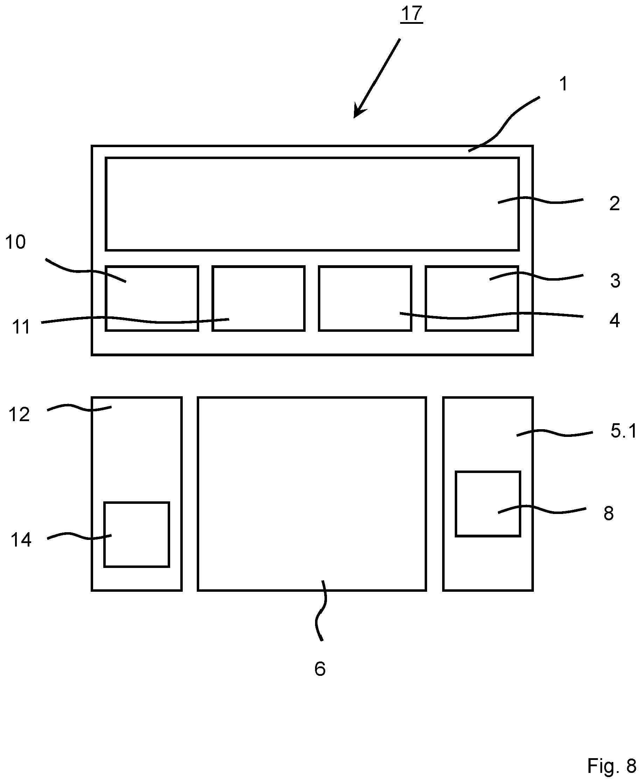

Fig. 8 shows a graphical representation of an exemplary (central) driving device 17. The exemplary driving device 17 of Fig. 8 may comprise a motion control unit 1. In addition, the driving device 17 may comprise an actuator controller 10. The actuator controller 10 may provide the driving control signals to the actuators 12. The position controller 11 may detect the current positions 98 of the carriers 16. The current position may be determined via detecting a certain carrier 16 (with a certain carrier-ID) on a certain transport module 106 (with a certain module-ID). Each transport module 106 may be linked to a certain position. Analogously, the position may be determined via a certain subarea 106 (with a certain subarea-ID) and / or certain grid (with a certain grid-ID) of the transport plane. The driving device 17 may further comprise a collision controller 4.

Moreover, the driving device 17 may comprise a communication controller 3. The communication controller 3 may be configured to manage the communication of the driving device 17 with other devices of the system. Data may be received by a driving device data communication module 5.1. The driving device data communication module 5.1 may be comprised by the driving device 17. The driving device data communication module 5.1 may receive and / or send data via a communication interface 8. Further, the driving device 17 may comprise a sensor device 6. The sensor device 6 may be configured to determine data indicative of the environment of the transport plane 112, in particular obstacles 104.

The driving device 17 may comprise actuators 12. The actuators 12 may comprise a moving unit 14. The moving unit 14 may comprise one or more magnets. The actuators 12 may apply a driving force onto the carriers 16. The actuators 12 may move the carrier 16 on a certain path, in particular, on a certain path on the transport plane. Each transport module may at least comprise one actuator 12.

### ... List of reference signs

- 1: motion control unit
- 2: travel route generation unit
- 3: communication controller
- 4: collision controller
- 5: carrier data communication module
- 5.1: driving device communication module
- 6: sensor device
- 7, 9, 15: sensors
- 8: communication interface
- 10: actuator controller
- 11: position controller
- 12: actuators
- 13: sample tube capture / release actuators
- 14: moving unit
- 16: carrier
- 17: driving device
- 21: first determining step
- 22: first moving step
- 23: detecting step
- 24: providing step
- 25: second determining step
- 26: second moving step
- 27: third determining step
- 98: current plane position (of the first carrier)
- 99: control device
- 101: first carrier
- 102: second carrier
- 103: third carrier
- 104: obstacle
- 105: area comprising the obstacle
- 106: grid / subarea / transport module
- 107: first destination plane position (of the first carrier)
- 108: first start plane position (of the first carrier)
- 109: first travel route / first trajectory
- 109.1: alternative first travel route / alternative first trajectory
- 110: transport plane
- 111: over the air link
- 127: second destination plane position (of the second carrier)
- 128: second start plane position (of the second carrier)
- 129: second travel route
- 137: observation position
- 138: current position of the third carrier
- 200: reference points
- 200.1: first reference point
- 200.2: second reference point
- 200.3: third reference point
- 201: broadcasted signals
- 300: Step 300
- 301: Step 301
- 302: Step 302
- 303: Step 303
- 304: Step 304
- 305: Step 305

## Claims

1. A method for operating a laboratory automation system, wherein the laboratory automation system comprises
- a plurality of carriers (16) configured to carry one or more sample containers and having a processor and a carrier data communication module (5);
- a transport plane (110);
- a control device (99) separately provided from the plurality of carriers (16) and having a processor and a control device (99) data communication module configured to communicate with carrier data communication module (5) of the carriers (16); and
- a driving device (17) configured to move, in response to driving control signals, the plurality of carriers (16) on the transport plane (110) between plane positions;
the method comprising:
- determining a first travel route (109) for a first carrier (101) from the plurality of carriers (16) in the control device (99), the first travel route (109) defining a first trajectory between a first start plane position (108) and a first destination plane position (107);
- moving the first carrier (101) along the first trajectory from the first start plane position (108) to a current plane position (98) on the transport plane (110) by the driving device (17) in response to receiving first driving control signals;
- detecting an obstacle (104) preventing the first carrier (101) from continuing movement along the first trajectory by a sensor device (6);
- providing obstacle information from the first carrier (101) to the control device (99), the obstacle information being indicative of the obstacle (104) detected;
- determining an alternative first travel route (109.1) for the first carrier (101), the alternative first travel route (109.1) defining an alternative first trajectory between the current plane position (98) and one of the first destination plane position (107) and an alternative plane position, wherein the alternative first travel route (109.1), in response to taking into account the obstacle information, is determined to circumvent the obstacle (104);
- moving the first carrier (101) along the alternative first trajectory (190.1) on the transport plane (110) by the driving device (17) in response to receiving alternative first driving control signals; and
- determining a second travel route (129) for a second carrier (102) from the plurality of carriers (16), the second travel route (129) defining a second trajectory between a second start plane position (128) and a second destination plane position (127) for the second carrier (102), wherein the second travel route (129), in response to taking into account the obstacle information, is determined to circumvent the obstacle (104).

2. Method of claim 1, wherein the detecting of the obstacle (104) comprises detecting the obstacle (104) by a carrier sensor device (6) provided on the first carrier (101).

3. Method of claim 1 or 2, wherein the determining of the alternative first travel route (109.1) comprises at least one of
- determining the alternative first travel route (109.1) for the first carrier (101) in the control device (99), and providing first alternative control signals indicative of the alternative first travel route (109.1) to the driving device (17); and
- locally determining the alternative first travel route (109.1) for the first carrier (101) in the first carrier (101).

4. Method of at least one of the preceding claims, wherein the determining of the second travel route (129) comprises at least one
- determining the second travel route (129) for the second carrier (102) in the control device (99), and providing second control signals indicative of the second travel route (129) to the driving device (17); and
- transmitting warning information comprising the obstacle information from the control device (99) to the second carrier (102), and locally determining the second travel route (129) for the second carrier (102) in the second carrier (102).

5. Method of at least one of the preceding claims, wherein the providing of the obstacle information comprises providing obstacle information indicative of at least one of:
- an obstacle plane position;
- a topology of the obstacle (104);
- driving force not available in a plane area (105) comprising the obstacle plane position;
- an obstacle sub-area of the transport plane (110) covered by the obstacle (104) on the transport plane (110);
- topography of an obstacle sub-area comprising the obstacle plane position;
- one or more neighboring carriers (16) located in the vicinity of the obstacle (104); and
- damage of surface for at least one of obstacle plane position and the obstacle subarea comprising the obstacle plane position.

6. Method of claim 5, wherein the providing of the obstacle information comprises, in response to receiving the obstacle information, storing no-access information in the control device (99), the no-access information being indicative of at least one of the obstacle plane position and the obstacle sub-area comprising the obstacle plane position being not accessible.

7. Method of at least one of the preceding claims, further comprising
- moving one of the second carrier (102) and a third carrier (103) from the plurality of carriers (16) to an obstacle observing plane position (137);
- determining supplementary obstacle data indicative of supplementary information about the obstacle (104); and
- transmitting the supplementary obstacle information from the second or third carrier (102, 103) to the control device (99) by data communication.

8. Method of claim 7, wherein the determining of the supplementary obstacle data comprises detecting sensor signals by a sensor device (6) provided with the second or third carrier (102, 103).

9. Method of at least one of the preceding claims, further comprising individually registering each of the plurality of carriers (16) with the control devices (99), wherein the registering comprises proving capability data indicative of functional capabilities provided by the carrier (16) from the carriers (16) to the control device (99).

10. Method of claims 7 and 9, further comprising, in the control device (99),
- evaluating capability data for the second and third carrier (102, 103); and
- selecting one of the second and third carriers (102, 103) for moving to the obstacle observing plane position (137) depending on the evaluation of the capability data.

11. Method of at least one of the preceding claims, further comprising
- providing condition information from the first carrier (101) to the control device (99) in response to detecting the obstacle (104), wherein the condition information is indicative of a condition of operation for the first carrier (101);
- in response to receiving the condition information, selecting an operation mode from a plurality of operation modes applicable for the first carrier (101); and
- determining the alternative first travel route (109.1), thereby, implementing the operation mode selected.

12. A laboratory automation system, comprising
- a plurality of carriers (16) configured to carry one or more sample container and having a processor and a carrier data communication module (5);
- a transport plane (110);
- a control device (99) separately provided from the plurality of carriers (16) and having a processor and a control device (99) data communication module configured to communicate with carrier data communication module (5) of the carriers (16); and
- a driving device (17) configured to move, in response to driving control signals, the plurality of carriers (16) on the transport plane (110) between plane positions;
wherein the laboratory automation system is configured to:
- determine a first travel route (109) for a first carrier (101) from the plurality of carriers (16) in the control device (99), the first travel route (109) defining a first trajectory between a first start plane position (108) and a first destination plane position (107);
- move the first carrier (101) along the first trajectory from the first start plane position (108) to a current plane position (98) on the transport plane (110) by the driving device (17) in response to receiving first driving control signals;
- detect an obstacle (104) preventing the first carrier (101) from continuing movement along the first trajectory by a sensor device (6);
- provide obstacle information from the first carrier (101) to the control device (99), the obstacle information being indicative of the obstacle (104) detected;
- determine an alternative first travel route (109.1) for the first carrier (101), the alternative first travel route (109.1) defining an alternative first trajectory between the current plane position (98) and one of the first destination plane position (107) and an alternative plane position, wherein the alternative first travel route (109.1), in response to taking into account the obstacle information, is determined to circumvent the obstacle (104);
- move the first carrier (101) along the alternative first trajectory (190.1) on the transport plane (110) by the driving device (17) in response to receiving alternative first driving control signals; and
- determine a second travel route (129) for a second carrier (102) from the plurality of carriers (16), the second travel route (129) defining a second trajectory between a second start plane position (128) and a second destination plane position (127) for the second carrier (102), wherein the second travel route (129), in response to taking into account the obstacle information, is determined to circumvent the obstacle (104).

13. A laboratory in-vitro diagnostic system, comprising the laboratory automation system of claim 12.
